# EUROPÄISCHE PATENTSCHRIFT

(11) **EP 3 422 522 B1**
(45) Veröffentlichungstag und Bekanntmachung des Hinweises auf die Patenterteilung: **11.03.2020**
(21) Anmeldenummer: 18180407.1
(22) Anmeldetag: 28.06.2018
(51) Int. Cl.: H02J 3/38, H02J 3/32

(54) **BEREITSTELLUNG VON ELEKTRISCHER LEISTUNG AN EIN ENERGIEVERSORGUNGSNETZ MITTELS EINER BEREITSTELLUNGSEINRICHTUNG MIT ERHÖHTER DYNAMIK**
PROVISION OF ELECTRICAL POWER TO AN ENERGY SUPPLY NETWORK BY MEANS OF A PROVISIONING DEVICE WITH EXTENDED RANGE
FOURNITURE DE PUISSANCE ÉLECTRIQUE À UN RÉSEAU D'ALIMENTATION ÉLECTRIQUE À L'AIDE D'UN DISPOSITIF DE FOURNITURE À DYNAMIQUE ACCRUE

(30) Priorität: 30.06.2017 DE 102017114703
(43) Veröffentlichungstag der Anmeldung: 02.01.2019
(73) Patentinhaber: Adaptive Balancing Power GmbH, 64293 Darmstadt (DE)
(72) Erfinder: Schaede, Hendrik, 64285 Darmstadt (DE); Schäfer, Christian, 68161 Mannheim (DE); Meder, Nicolai, 64293 Darmstadt (DE); Golisch, Sebastian, 64295 Darmstadt (DE)
(74) Vertreter: Pfenning, Meinig & Partner mbB

(56) Entgegenhaltungen:
- DE-A1-102013 105 444
- DE-A1-102015 102 430

## Beschreibung

Die Erfindung betrifft ein Bereitstellungssystem zum Bereitstellen von einer elektrischen Leistung an ein Energieversorgungsnetz, mit einer ersten und einer zweiten Einrichtung zum jeweiligen Bereitstellen einer jeweiligen elektrischen Leistung. Die Erfindung betrifft auch eine für ein solches Bereitstellungssystem geeignete (erste oder zweite) Einrichtung zum Bereitstellen einer elektrischen Leistung. Überdies betrifft die Erfindung ein Verfahren zum Bereitstellen einer elektrischen Leitung an ein Energieversorgungsnetz.

Ein stabiles Stromversorgungsnetz oder Energieversorgungsnetz ist ein wichtiger Wirtschaftsfaktor und gilt als volkswirtschaftliches Gut. Um dieses Gut zu schützen und das Energieversorgungsnetz zu stabilisieren, beauftragt der Staat die Netzbetreiber, genauer gesagt die Übertragungsnetzbetreiber, mit der Aufgabe, Regelleistung, welche auch als Reserveleistung bezeichnet wird, zu beschaffen beziehungsweise bereitzustellen. Diese Regelleistung kann auch als sogenannte Systemdienstleistung bezeichnet werden. Die Regelleistung gewährleistet die Versorgung der Verbraucher mit genau der benötigten elektrischen Leistung auch bei unvorhergesehenen, destabilisierenden Ereignissen im Energieversorgungsnetz. Dazu können bei regelfähigen Kraftwerkseinrichtungen kurzfristig Leistungsanpassungen durchgeführt werden, beispielsweise schnell anlaufende Kraftwerke wie Kraftwerke mit Gasturbinen gestartet oder Pumpspeicherkraftwerke aktiviert werden. Alternativ können bestimmte Verbraucher mit einer entsprechenden Last- oder Verbrauchssteuerung vom Energieversorgungsnetz getrennt werden. Dabei ist diese Trennung oft nur für einen maximalen Zeitraum möglich, die der Regelleistung entsprechende Regelenergie also begrenzt.

Die Übertragungsnetzbetreiber können somit zur Aufrechterhaltung der Versorgungs- und Systemsicherheit automatisch oder per entsprechendem Schaltbefehl Lasten vom Versorgungsnetz trennen und/oder Kraftwerkseinrichtungen entsprechende Soll-Werte für eine bereitzustellende Leistung zuweisen. Durch diese Maßnahmen lässt sich das Versorgungsnetz stabilisieren und verhindern, dass es im Extremfall zu einem sogenannten Lastabwurf und dadurch ausgelöste Stromausfälle kommt. Durch die Regelleistung wird also allgemein in einem Wechselstromversorgungsnetz die Netzfrequenz stabil gehalten und somit größere Störungen wie besagte Stromausfälle auf ein Minimum reduziert.

In einem Netzgebiet wie beispielsweise dem des Verbandes der europäischen Übertragungsnetzbetreiber (European Network of Transmission System Operators for Electricity, "ENTSO-E") können dabei die Maßnahmen, welche zur Stabilisierung der Frequenz in dem Energieversorgungsnetz wie folgt definiert sein: Die auch als Trägheit bezeichnete Momentanreserveleistung ist eine systemabhängige Größe, die schnellen Frequenzänderungen ohne Verzögerungen entgegenwirkt. Die sogenannte Primärregelleistung wird (bevorzugt unmittelbar) über die Netzfrequenz gesteuert und muss innerhalb eines vorgegebenen Zeitraums von 30 Sekunden voll aktiviert, also bereitgestellt werden können. Die Sekundärregelleistung muss innerhalb von 30 Sekunden auf Störungen reagieren und in dem vorgeschriebenen Zeitraum von fünf Minuten vollständig aktiviert werden können. Die Tertiär-Regelung, welche auch als Minutenreserveleistung bezeichnet wird, muss innerhalb von fünf Minuten reagieren und innerhalb des vorgeschriebenen Zeitraums von 15 Minuten vollständig aktiviert werden können. Eine bereitzustellende elektrische Leistung kann also als Primärregelleistung bezeichnet werden, wenn sie innerhalb eines ersten Zeitraums zwischen Null und einer ersten Grenzzeit, beispielsweise 30 Sekunden, voll aktivierbar ist, als Sekundärregelleistung, wenn sie innerhalb eines zweiten Zeitraums zwischen der ersten Grenzzeit und einer zweiten Grenzzeit, beispielsweise 5 Minuten, voll aktivierbar ist, und als Tertiär-Regelung, wenn sie in einem dritten Zeitraum zwischen der zweiten Grenzzeit und einer dritten Grenzzeit, beispielsweise 15 Minuten, voll aktivierbar ist. Alternativ oder ergänzend können weitere Regelleistungen mit entsprechenden Zeiträumen für das Aktivieren der Regelleistung vorgegeben sein. Diese entsprechenden Reserveleistungen beziehungsweise Regelleistungen können als Dienstleistung gehandelt beziehungsweise ein Bereitstellen der entsprechenden Reservebeziehungsweise Regelleistung vergütet werden.

Um nun mit einem Bereitstellungssystem Regelleistung bereitstellen zu können, müssen bestimmte Regularien eingehalten werden, die im Rahmen einer sogenannten Präqualifizierung abgeprüft werden. So kann ein Anbieter, welcher an dem Handel teilnehmen will, mindestens eine verfügbare Regelleistung von einem Megawatt nachweisen müssen. Anlagen mit einer Leistung von weniger als einem Megawatt können somit zwar präqualifiziert, also allgemein für den Handel zugelassen, aber nicht einzeln als solche vermarktet werden. Überdies muss eine verfügbare Regelenergie nachgewiesen werden, sodass das Erbringen der Regelleistung über eine vorgegebene Einsatzdauer gewährleistet ist.

Energiespeichereinrichtungen wie beispielweise Akkumulatoren und/oder Rotationsenergiespeicher können hier vor allem im Bereich der Trägheit und der Primärregelleistung sinnvoll eingesetzt werden. Dies liegt daran, dass die erforderliche Einsatzdauer gegenüber der bei der Sekundärregelleistung und Minutenreserve oder Minutenregelleistung erforderlichen Einsatzdauer sehr kurz ist. Dadurch muss für den Einsatz der Energiespeichereinrichtung als Einrichtung zum Bereitstellen der geforderten Regelleistung für Trägheit und Primärregelleistung nur relativ wenig der für Energiespeicher zum Speichern elektrischer Energie im Vergleich zu Kraftwerkseinrichtungen teuren Speicherkapazität vorgesehen sein. Da die Erbringung von Trägheit oder Momentanreserve beispielsweise im Netzgebiet des Verbands der europäischen Übertragungsnetzbetreiber derzeit nicht vergütet wird, werden heute allgemein Energiespeichereinrichtungen zur Erbringung, das heißt Bereitstellung, von Regelleistung als Primärregelleistung eingesetzt.

Grundsätzlich ist die Bereitstellung einer Regelleistung, welche die Stabilität des Netzes erhöht, unabhängig von der Größe des Netzgebiets möglich. So kann auch in kleineren Netzen, beispielsweise sogenannten Microgrids oder Inselnetzen, in denen keine Systemdienstleistung für eine Vergütung spezifiziert ist, eine Regelleistung bereitgestellt werden.

Alternativ zu der Stabilisierung von Wechselstromversorgungsnetzen können auch Gleichstromversorgungsnetze mit Energiespeichereinrichtungen stabilisiert werden. Dabei kann ein Stabilisieren sowohl im Bereich der Stromübertragung, insbesondere der Hochspannungsgleichstromübertragung, als auch im Bereich der Stromverteilung, beispielsweise in lokalen Versorgungsnetzen wie Werksversorgungsnetzen, vorgesehen sein. Entsprechend der Frequenz in Wechselstromversorgungsnetzen kann in einem Gleichstromversorgungsnetz die Spannung des Stromnetzes die Regelgröße oder der Regelparameter für die entsprechenden Regelleistungen oder Systemdienstleistungen sein.

Der Vorteil von der Nutzung von Energiespeichereinrichtungen zum Speichern elektrischer Energie zum Erbringen der Systemdienstleistungen liegt hier auch in der CO₂-freien Erbringung der entsprechenden Systemdienstleistung. Überdies können Energiespeichereinrichtungen die geforderte Regelleistung aufnehmen oder abgeben, das heißt positive und negative Leistung erbringen. Nachteilig ist hier, dass aufgrund der großen Kosten die Kapazität der Energiespeichereinrichtungen begrenzt ist. Überdies müssen die Speichersysteme nachgeladen werden, um die entsprechende Systemdienstleistung erbringen zu können. Das Nachladen resultiert hier in zusätzlichen Belastungen des entsprechenden Energieversorgungsnetzes, welche kritische Netzzustände verstärken können. Aufgrund der einschlägigen Regularien für die Erbringung der Systemdienstleistungen, der oben genannten Präqualifikation, ist dabei auch eine Überdimensionierung des Speichersystems nötig, welche zusätzliche Kosten verursacht.

Neben konventionellen Kraftwerkseinrichtungen können auch virtuelle Kraftwerke oder virtuelle Kraftwerkseinrichtungen für die Erbringung der genannten Systemdienstleistungen genutzt werden. Virtuelle Kraftwerke bündeln dabei mehrere Einrichtungen zum Bereitstellen einer elektrischen Leistung, zum Beispiel mehrere konventionelle Kraftwerkseinrichtungen zum Erzeugen elektrischer Energie. Die entsprechend von den einzelnen Kraftwerkseinrichtungen bereitgestellte Energie kann dabei gebündelt vermarktet werden. Dabei kann ein Teil der elektrischen Leistung einer solchen virtuellen Kraftwerkseinrichtung, beispielsweise 10 Prozent, eine geeignete Dynamik aufweisen, weiche es ermöglicht, die virtuelle Kraftwerkseinrichtung zumindest teilweise zur Erbringung oder Bereitstellung von Primärregelleistung zu präqualifizieren, das heißt zuzulassen. Damit kann ein Teil der elektrischen Leistung der virtuellen Kraftwerkseinrichtung als Primärregelleistung vermarktet und entsprechende Einnahmen generiert werden. In eine solche virtuelle Kraftwerkseinrichtung können auch Energiespeichereinrichtungen eingebunden werden, welche alternative Betriebsweisen der virtuellen Kraftwerkseinrichtung ermöglichen, insbesondere eine entsprechende Dynamik der Bereitstellung der Leistung erhöhen.

Zur Erbringung von Regelleistung präqualifizierte Einrichtungen können auch in sogenannten Regelleistungspools zusammengefasst werden, welche als virtuelle Kraftwerkseinrichtung zur Erbringung von Regelleistung verstanden werden können. Die in einem solchen Regelleistungspool zusammengeführten Einrichtungen werden gemeinsam vermarktet, sodass auch Einrichtungen, weiche eine zu geringe Leistung für eine einzelne Vermarktung aufweisen, als Teil eines solchen Regelleistungspools vermarktet werden können. Dabei kann die Betriebsweise der im Regelleistungspool gebündelten Einrichtungen optimiert werden, sodass Ausnutzung und Wirtschaftlichkeit der Einrichtungen insgesamt steigen.
In diesem Zusammenhang offenbart die EP 2 818 694 A1 ein Kombinationskraftwerk zur Einspeisung von Energie in ein nicht-lokales Stromnetz mit einem Turbinenkraftwerk und einer Energiespeicheranlage.

Aus der DE 10 2014 009 953 A1 sind ein System und Verfahren zur Bestimmung der Eignung mehrerer elektrischer Produzenten und Verbraucher, die in einem Netzwerk als virtuelles Kraftwerk betrieben werden, für die Erbringung von Regelleistung, bekannt.

Aus der DE 10 2015 200 569 A1 ist ein virtuelles Kraftwerk mit übergeordnetem Ausbalancieren von elektrischen Energiespeicheranlagen bekannt.
Die WO 2012/177633 A2 offenbart in diesem Zusammenhang ein System und ein Verfahren zum Bereitstellen elektrischer Energie an ein elektrisches Versorgungsnetz. Dabei wird auf Anforderung elektrische Energie in einem Generator erzeugt und unter Nutzung der erzeugten Energie ein Energieniveau eines Energiespeichers so eingestellt, dass die angeforderte Energie an das Energieversorgungsnetz bereitgestellt wird.

Dokument DE 102013105444 A1 offenbart ein Bereitstellungssystem zum Bereitstellen von elektrischer Leistung gemäß dem Oberbegriff des Anspruchs 1.

Der Erfindung liegt die Aufgabe zugrunde, die Bereitstellung von elektrischer Leistung, insbesondere elektrischer Regelleistung, mit vergrößerter Dynamik zu ermöglichen und somit insbesondere auch Einrichtungen, welche nach dem Stand der Technik nicht zur Einbringung einer Regelleistung in ein Energieversorgungsnetz geeignet sind, zum Bereitstellen der Regelleistung zu ertüchtigen.

Diese Aufgabe wird durch die Gegenstände der unabhängigen Patentansprüche gelöst. Vorteilhafte Ausführungsformen ergeben sich aus den abhängigen Patentansprüchen, der Beschreibung und den Figuren.

Ein Aspekt der Erfindung betrifft ein Bereitstellungssystem zum Bereitstellen von einer elektrischen Leistung, insbesondere zum Bereitstellen einer Regelleistung, in einem Energieversorgungsnetz. Das Energieversorgungsnetz kann insbesondere ein stationäres Energieversorgungsnetz sein. Das Energieversorgungsnetz kann auch als Stromversorgungsnetz bezeichnet werden. Das Bereitstellungssystem weist dabei eine erste Einrichtung zum Bereitstellen einer elektrischen Leistung, beispielsweise eine Energiespeichereinrichtung zum Speichern elektrischer Energie, und eine zweite Einrichtung zum Bereitstellen einer elektrischen Leistung, beispielsweise eine Kraftwerkseinrichtung zum Erzeugen elektrischer Energie, auf.

Dabei weist die erste Einrichtung eine erste, insbesondere individuell der ersten Einrichtung zugeordnete, Messeinrichtung zum Messen mindestens eines Regelparameters, also eines oder mehrere Regelparameter, des Energieversorgungsnetzes auf. Unter einem Messen eines Parameters kann hier und im Folgenden jeweils auch ein Messen eines Wertes für den Parameter verstanden werden. Weiterhin weist die erste Einrichtung eine erste individuell der ersten Einrichtung zugeordnete Regeleinrichtung zum Regeln einer von der ersten Einrichtung an das Energieversorgungsnetz bereitgestellten Leistung in Abhängigkeit von dem durch die erste Messeinrichtung gemessenen Regelparameter auf. Die erste Regeleinrichtung kann also insbesondere ausgebildet sein, die Leistungsflüsse der ersten Einrichtung autark zu regeln. Die erste Regeleinrichtung kann somit als unabhängige, das heißt insbesondere von der weiter unten erwähnten zweiten Regeleinrichtung unabhängige, Regeleinrichtung verstanden werden. Insbesondere ist die Regeleinrichtung ausschließlich der ersten Einrichtung zugeordnet, ist also ausgebildet einen Leistungsfluss nur der ersten Einrichtung zu regeln. Bevorzugt ist umgekehrt auch die erste Einrichtung ausschließlich der ersten Regeleinrichtung zugeordnet, also der Leistungsfluss der ersten Einrichtung nur durch die erste Regeleinrichtung regelbar. Insbesondere ist der Leistungsfluss der ersten Einrichtung nicht durch die weiter unten beschriebene zweite Regeleinrichtung regelbar.

Dabei ist in der ersten Regeleinrichtung zumindest ein erster weiterer Parameter hinterlegt, welcher einen Betriebspunkt der zweiten Einrichtung repräsentiert. Unter einem Hinterlegen des weiteren Parameters kann hier und im Folgenden auch ein Hinterlegen zumindest eines Wertes für den weiteren Parameter verstanden werden. Dieser weitere Parameter kann beispielsweise über eine Datenverbindung an die erste Einrichtung übermittelt sein oder aus einem in der ersten Einrichtung hinterlegten Rechenmodell für die zweite Einrichtung ermittelt sein. Die erste Regeleinrichtung ist dabei ausgelegt, die von der ersten Einrichtung bereitgestellte Leistung nicht nur in Abhängigkeit von dem gemessenen Regelparameter, sondern auch in Abhängigkeit von dem ersten weiteren Parameter zu regeln. Die von der ersten Einrichtung bereitgestellte Leistung kann also in Abhängigkeit eines durch den Regelparameter repräsentierten Betriebspunkt oder Zustand des Energieversorgungsnetzes und in Abhängigkeit eines durch den (ersten) weiteren Parameter repräsentierten Betriebspunkt oder Zustand der zweiten Einrichtung geregelt werden.

Die zweite Einrichtung weist eine zweite Messeinrichtung, insbesondere individuell der zweiten Einrichtung zugeordnete Messeinrichtung, zum Messen des zumindest einen Regelparameters des Energieversorgungsnetzes auf und zusätzlich eine von der ersten verschiedene zweite individuell der zweiten Einrichtung zugeordnete Regeleinrichtung zum Regeln einer von der zweiten Einrichtung an das Energieversorgungsnetz bereitgestellten Leistung in Abhängigkeit von dem durch die zweite Messeinrichtung gemessenen Regelparameter auf. Insbesondere kann die zweite Regeleinrichtung ausschließlich der zweiten Einrichtung zugeordnet sein, bevorzugt umgekehrt die zweite Einrichtung ausschließlich der zweiten Regeleinrichtung. Insbesondere gilt das für die erste Regeleinrichtung Gesagte mutatis mutandis für die zweite Regeleinrichtung, beispielsweise ist so insbesondere der Leistungsfluss der zweiten Einrichtung nicht durch die erste Regeleinrichtung regelbar.

Die elektrische Leistung, insbesondere die Regelleistung beziehungsweise die Systemdienstleistung, wird somit durch eine Kombination der von der ersten und von der zweiten Einrichtung bereitgestellten elektrischen Leistung erbracht. Dies flexibilisiert das Bereitstellen, da die erste und die zweite Einrichtung unterschiedliche Dynamiken und Kapazitäten aufweisen können. Das Regelverhalten der ersten und/oder der zweiten Regeleinrichtung kann insbesondere in Abhängigkeit von einer oder mehreren Eigenschaften der jeweiligen Einrichtung und/oder Einrichtungen, beispielsweise einer Kapazität und/oder einer Maximalleistung und/oder einer Dynamik und/oder einer Zyklenfestigkeit, unterschiedlich ausgelegt werden und hinsichtlich unterschiedlicher Kriterien optimiert werden. So kann beispielsweise ein Verschleiß des Systems gegen finanzielle Einkünfte abgewogen werden, sodass die Wirtschaftlichkeit des Gesamtsystems maximiert wird. Beispielsweise kann hier als erste Einrichtung eine Energiespeichereinrichtung mit großer Dynamik genutzt werden und als zweite Einrichtung eine Kraftwerkseinrichtung mit einer großen Kapazität. Es ist aber beispielsweise auch möglich, mit einer Energiespeichereinrichtung mit großer Dynamik als erste Einrichtung eine weitere Energiespeichereinrichtung als zweite Einrichtung zu kombinieren, beispielsweise einen Energiespeicher (wie beispielsweise einen Flussspeicher) mit im Vergleich zur ersten Energiespeichereinrichtung geringeren Zyklenfestigkeit.

Insgesamt kann die elektrische Leistung somit durch die beiden Einrichtungen flexibilisiert unter Berücksichtigung des Betriebspunkts (wie weiter unten dargelegt: zumindest) der zweiten Einrichtung sowohl durch die erste als auch die zweite Regeleinrichtung geregelt werden.

Es ergibt sich der Vorteil, dass die beiden Einrichtungen gemeinsam die elektrische Leistung, insbesondere die Regelleistung, erbringen und jeweilige Vorzüge der einzelnen Einrichtungen dem Bereitstellungssystem insgesamt zugutekommen und im Rahmen des Bereitstellungssystems genutzt werden können.

Dadurch, dass die beiden Einrichtungen die jeweils von ihnen zu erbringenden Leistungen in Abhängigkeit des Regelparameters einstellen, welcher den Einrichtungen unabhängig voneinander vorliegt, ist keine abgesicherte und/oder verschlüsselte und/oder redundante und/oder schnelle, insbesondere überhaupt keine Datenkommunikation und/oder Datenverbindung zwischen den beiden Einrichtungen erforderlich, da der Regelparameter unabhängig in den beiden Einrichtungen gemessen werden kann beziehungsweise vorliegt. Beispielsweise ist so auch keine Standleitung, also keine stehende Datenverbindung erforderlich. In Folge ist auch keine übergeordnete Steuerung erforderlich, welche die von der ersten und der zweiten Einrichtung bereitgestellte elektrische Leistung koordiniert. Unter einer schnellen Datenkommunikation oder schnellen Datenverbindung kann hier eine Datenkommunikation oder -verbindung verstanden werden, welche über eine für ein Regeln der von der jeweiligen Einrichtung bereitgestellten Leistung über die Datenkommunikation oder -verbindung in Echtzeit ausreichende Kapazität aufweist.

Dadurch, dass die beiden Einrichtungen den Regelparameter lokal, also vor Ort individuell und unabhängig voneinander erfassen und entsprechend einer in der jeweiligen Einrichtung hinterlegten vorgegebenen Vorschrift darauf reagieren, bleibt das Verhalten des Bereitstellungssystems als Gesamtanlage auch bei einem Ausfall eines Kommunikationsnetzes und/oder bei einer nicht möglichen oder beeinträchtigten Datenkommunikation systemdienlich, da die beiden Einrichtungen auch ohne Datenverbindung ein systemdienliches, also die Stabilität des Energieversorgungsnetzes förderliches, Verhalten beibehalten. Auch wenn beispielsweise das Energieversorgungsnetz zwischen den Einrichtungen getrennt wird, also beispielsweise bei einem Störfall erste und zweite Einrichtungen unterschiedliche, dann voneinander entkoppelte Abschnitte des Energieversorgungsnetzes eine Leistung bereitstellen, ist das Verhalten der beiden Einrichtungen weiterhin systemdienlich, da beide auf die jeweils vorort gemessenen Regelparameter reagieren.

In einer vorteilhaften Ausführungsform kann vorgesehen sein, dass auch eine dritte Einrichtung zum Bereitstellen von einer elektrischen Leistung mit einer dritten Messeinrichtung zum Messen des Regelparameters des Energieversorgungsnetzes und einer dritten individuell der dritten Einrichtung zugeordnete Regeleinrichtung zum Regeln einer von der dritten Einrichtung an das Energieversorgungsnetz bereitgestellten Leistung in Abhängigkeit von dem durch die dritte Messeinrichtung gemessenen Regelparameter aufweist. Dabei repräsentiert dann der oder die ersten weiteren Parameter auch einen Betriebspunkt der dritten Einrichtung und sodass die erste Einrichtung analog zu oben beschriebenem die von der ersten Einrichtung bereitgestellte Leistung auch in Abhängigkeit des Betriebszustands der dritten Einrichtung regeln kann. Dies flexibilisiert das Bereitstellungssystem weiter.

In einer vorteilhaften Ausführungsform ist vorgesehen, dass in der zweiten Regeleinrichtung zumindest ein zweiter weiterer Parameter hinterlegt ist, welcher einen Betriebspunkt der ersten Einrichtung repräsentiert, und die zweite Regeleinrichtung ausgebildet ist, die von der zweiten Einrichtung bereitgestellte Leistung auch in Abhängigkeit von dem zweiten weiteren Parameter zu regeln.

Das hat den Vorteil, dass beide Einrichtungen jeweils die Eigenschaften beziehungsweise den Betriebspunkt der anderen Einrichtung bei der jeweils bereitgestellten Leistung berücksichtigen und die für die bereits bestehende Ausführungsform geschilderten Vorteile nun mutatis mutandis symmetrisch wechselweise für erste und zweite Einrichtung erzielt werden, sodass Flexibilität, Stabilität und Genauigkeit des Bereitstellens der elektrischen Leistung nochmal gesteigert sind.

Entsprechend kann bei vorhandener dritter Einrichtung auch der oder die zweiten Parameter auch einen Betriebspunkt der dritten Einrichtung repräsentieren, sodass mutatis mutandis die bisher und im Folgenden beschriebenen Vorteile und Ausführungsformen auch für ein Bereitstellungssystem mit drei oder (analog) mehr Einrichtungen realisiert werden können.

In einer anderen vorteilhaften Ausführungsform ist vorgesehen, dass die erste Einrichtung zumindest eine Energiespeichereinrichtung, also eine oder mehrere Energiespeichereinrichtungen, zum Speichern elektrischer Energie oder zumindest eine Kraftwerkseinrichtung, also eine oder mehrere Kraftwerkseinrichtungen, zum Erzeugen elektrischer Energie umfasst oder ist, und die zweite Einrichtung zumindest eine Energiespeichereinrichtung, also eine oder mehrere Energiespeichereinrichtungen, zum Speichern elektrischer Energie oder zumindest eine Kraftwerkseinrichtung, also eine oder mehrere Kraftwerkseinrichtungen, zum Erzeugen elektrischer Energie umfasst oder ist. Vorteilhafterweise weist dabei die erste Einrichtung bei dem Bereitstellen der elektrischen Leistung eine von der zweiten Einrichtung verschiedene Dynamik und/oder eine verschiedene Kapazität und/oder eine verschiedene Zyklenfestigkeit auf. Erste und zweite Einrichtung können also bevorzugt auf unterschiedlichen Technologien oder Speicher- beziehungsweise Erzeugungsprinzipien für elektrische Energie basieren. Bevorzugt ist dabei die erste Einrichtung eine Energiespeichereinrichtung zum Speichern elektrischer Energie und die zweite Einrichtung eine Kraftwerkseinrichtung zum Erzeugen elektrischer Energie.

Gerade in der letztgenannten bevorzugten Ausführungsform ergibt sich der Vorteil, dass bereits in der einfachsten Ausführung, in welcher die erste Einrichtung die von der ersten Einrichtung bereitgestellte elektrische Leistung in Abhängigkeit des gemessenen Regelparameters und des ersten weiteren Parameters geregelt wird, aufgrund der höheren Dynamik, die eine Energiespeichereinrichtung im Vergleich zu einer Kraftwerkseinrichtung bei dem Bereitstellen der elektrischen Leistung aufweist, eine mangelnde Dynamik der Kraftwerkseinrichtung durch die Energiespeichereinrichtung ausgeglichen werden kann. In diesem Fall können also bereits in der einfachsten Ausführungsform die erste Einrichtung als Energiespeichereinrichtung und die zweite Einrichtung als Kraftwerkseinrichtung in dem Bereitstellungssystem in ihrer jeweiligen hauptsächlichen Stärke voll ausspielen:
Die erste Einrichtung liefert hier die beispielsweise für das Erbringen einer Regelleistung erforderliche Dynamik und flexibilisiert so das Bereitstellungssystem. Die zweite Einrichtung erweitert die Kapazität des Bereitstellungssystems und trägt somit zur Konformität des Bereitstellungssystems mit einschlägigen Vorschriften im Rahmen des Erbringens von Regelleistung in Energieversorgungsnetzwerken bei. Gerade wenn erste und zweite Einrichtung unterschiedliche Eigenschaften aufweisen, kann somit entsprechend den vorgeschlagenen Ausgestaltungen ein flexibles und robustes Bereitstellungssystem mit vorteilhaften Gesamteigenschaften erreicht werden.
In einer weiteren vorteilhaften Ausführungsform ist vorgesehen, dass die erste Einrichtung mit einem eigenen ersten Anschluss an das Energieversorgungsnetz angeschlossen ist und die zweite Einrichtung mit einem von dem ersten verschiedenen eigenen zweiten Anschluss an das Energieversorgungsnetz angeschlossen ist. Erste und zweite Einrichtung können damit an unterschiedlichen Orten installiert sein. Beispielsweise können erste und zweite Einrichtung in einem Abstand von über 100 Metern, über 1 Kilometer, über 10 Kilometern, über 50 Kilometern oder aber auch über 100 Kilometern angeordnet sein. Beispielsweise können die unterschiedlichen Einrichtungen auch in unterschiedlichen Städten oder in unterschiedlichen Ländern stehen und dort unabhängig voneinander an das Energieversorgungsnetz angeschlossen sein.

Gerade die entfernte Anordnung oder Installation der beiden Einrichtungen voneinander erhöht die Flexibilität des Bereitstellungssystems. Durch die vorgeschlagene dezentrale Regelung muss hier zwischen den beiden Einrichtungen auch keine Datenverbindung bestehen beziehungsweise es genügt, falls eine langsame (nicht schnelle) und/oder nur temporär verfügbare Datenverbindung zwischen den beiden Regeleinrichtungen vorhanden ist.

Erfindungsgemäss ist vorgesehen, dass in der ersten Regeleinrichtung ein Rechenmodell für die zweite Einrichtung mit zumindest einer Eigenschaft und/oder Betriebsweise der zweiten Einrichtung hinterlegt ist, und der in der ersten Regeleinrichtung hinterlegte Parameter aus dem Rechenmodell in Abhängigkeit von dem gemessenen Regelparameter abgeleitet ist. Alternativ oder ergänzend kann in der zweiten Regeleinrichtung ein Rechenmodell für die erste Einrichtung mit zumindest einer Eigenschaft oder der Betriebsweise der ersten Einrichtung hinterlegt sein, und der in der zweiten Regeleinrichtung hinterlegte weitere Parameter aus dem Rechenmodell in Abhängigkeit von dem gemessenen Regelparameter abgeleitet sein. Die erste und/oder zweite Regeleinrichtung berechnet oder simuliert also das Verhalten der jeweils anderen Einrichtung in Abhängigkeit des außen anliegenden beziehungsweise gemessenen Regelparameters. Die eigene bereitgestellte Leistung wird dann entsprechend vorgegebener Regeln an den gemessenen Regelparameter und an das entsprechend dieses Regelparameters erwartete Verhalten der anderen Komponente, welches durch den jeweiligen weiteren Parameter repräsentiert ist, angepasst.

Insbesondere kann so die für eine, beispielsweise als Energiespeichereinrichtung ausgeführte, Einrichtung eine Betriebsstrategie, insbesondere damit die bereitzustellende negative und/oder positive Leistung und/oder ein zu erreichender Ladezustand, in Abhängigkeit des gemessenen Regelparameters, also einer Anforderung des Energieversorgungsnetzes, sowie in Abhängigkeit von dem (von dem weiteren Parameter repräsentierten) berechneten Verhalten der weiteren Einrichtung, beispielsweise der Kraftwerkseinrichtung, vorgegeben oder geregelt werden.

Die weitere Einrichtung, beispielsweise Kraftwerkseinrichtung, ermittelt die Betriebsstrategie, insbesondere damit die bereitzustellende Leistung, basierend auf, das heißt in Abhängigkeit von dem Regelparameter und bevorzugt dem simulierten Verhalten der anderen Einrichtung, beispielsweise des Energiespeichersystems. Beide Einrichtungen erbringen somit unabhängig voneinander, dezentral geregelt, gemeinsam die gewünschte Leistung oder Regelleistung und stabilisieren dabei das Gesamtsystem des Energieversorgungsnetzes. Vorteilhafterweise ist dabei kein Datenaustausch zwischen den unterschiedlichen Einrichtungen erforderlich. Die Betriebsstrategie kann also insbesondere als Vorschrift verstanden werden, welche einem Wert des Regelparameters und dem simulierten Verhalten der anderen Einrichtung einen Wert der bereitzustellenden Leistung zuordnet.

Die Exaktheit der hinterlegten Rechenmodelle ermöglicht dabei die Erbringung der Leistung im Rahmen der beispielsweise aufgrund einschlägiger Vorschriften geforderten Genauigkeit. Dabei kann ein Spielraum in den Regularien durch die jeweiligen Regeleinrichtungen auf Grund des vorhandenen Rechenmodells oder der vorhandenen Rechenmodelle ausgenutzt werden, um die Wirtschaftlichkeit des Bereitstellungssystems oder aber einen Verschleiß des Bereitstellungssystems zu optimieren.

Erfindungsgemäss ist dabei vorgesehen, dass zumindest eine der Einrichtungen eine Energiespeichereinrichtung umfasst oder ist und in dem in der der jeweils anderen Einrichtung zugeordneten Regeleinrichtung hinterlegten Rechenmodell für einen Betrieb der Energiespeichereinrichtung ein in der Energiespeichereinrichtung auftretender energetischer Verlust vorgegeben und/oder berücksichtigt ist. Die bei dem Betrieb der Energiespeichereinrichtung auftretenden energetischen Verluste sind somit über das Rechenmodell der anderen Einrichtung, beispielsweise der Kraftwerkseinrichtung als zweiter Einrichtung, bekannt. Die andere Einrichtung, beispielsweise die Kraftwerkseinrichtung, kann diese Verluste über die eigene Leistungserbringung oder die eigene bereitgestellte Leistung kompensieren. Entsprechend kann dann die Betriebsstrategie der Energiespeichereinrichtung, das heißt die Regeleinrichtung der Energiespeichereinrichtung, dieses Verhalten der Anlage mit berücksichtigen und beispielsweise ohne die Stabilität des Energieversorgungsnetzes zu gefährden geladen und/oder entladen, also in seinem Ladezustand angepasst werden. Die Kraftwerkseinrichtung oder weitere Energiespeichereinrichtung kann also die energetischen Verluste der einen Energiespeichereinrichtung ausgleichen.
Zusätzlich zu einer erhöhten Verfügbarkeit und Genauigkeit der entsprechenden bereitstellbaren Leistung durch das Bereitstellungssystem wird so auch die Stabilität des Energieversorgungsnetzwerkes erhöht, da das Bereitstellungssystem einen eigenen zur Vorhaltung der gewünschten Regelleistung erforderlichen auf Grund der energetischen Verluste in der Energiespeichereinrichtung auftretenden Bedarf bereits decken kann.
In einer weiteren vorteilhaften Ausführungsform ist vorgesehen, dass zumindest eine der Einrichtungen, also die Energiespeichereinrichtung und/oder die Kraftwerkseinrichtung, ausgebildet ist oder sind, über eine entsprechende Datenverbindung, über welche die beiden Einrichtungen, also erste und zweite Einrichtung und insbesondere Energiespeichereinrichtung und Kraftwerkseinrichtung, gekoppelt sind oder koppelbar sind, eine Information über den Betriebspunkt der jeweils anderen Einrichtung, abzurufen und/oder die hinterlegten Parameter und/oder das hinterlegte Rechenmodell an die abgerufene Information anzupassen. Das Anpassen des hinterlegten Parameters und/oder des hinterlegten Rechenmodells kann hier als ein Aktualisieren des hinterlegten Parameters und/oder des hinterlegten Rechenmodells in Abhängigkeit der abgerufenen Information verstanden werden.

Die Datenverbindung kann dabei beispielsweise auch über eine zentrale Informationsvermittlungseinrichtung erfolgen, an welche eine der beiden Einrichtungen oder beide Einrichtungen ihren Betriebspunkt melden, insbesondere regelmäßig melden, und die andere oder beide Einrichtungen jeweils die Information über den Betriebspunkt abrufen können beziehungsweise ausgebildet sind, diese regelmäßig abzurufen. Alternativ oder ergänzend können die Einrichtungen ihre Information über ihren Betriebspunkt auch direkt an die jeweils andere Einrichtung bereitstellen oder eine Information über den Betriebspunkt der jeweils anderen Einrichtung direkt von dieser abrufen. Die Datenverbindung kann also auch direkt zwischen den beiden Einrichtungen bestehen. Dabei kann es sich insbesondere um eine nur temporär verfügbare oder eine langsame (also nicht in obigem Sinne schnelle) Datenverbindung handeln. Unter einer nur temporär verfügbaren Datenverbindung kann hier eine Datenverbindung verstanden werden, deren Verfügbarkeit ungewiss ist. Eine langsame Datenverbindung und auch eine temporär verfügbare Datenverbindung sind jedenfalls Datenverbindungen, deren Datenrate und/oder Verfügbarkeit für ein direktes Regeln einer von der jeweiligen Einrichtung bereitgestellten Leistung über die Datenverbindung nicht ausreichend ist.

Das hat den Vorteil, dass jeweilige Abweichungen in dem durch den ersten und/oder zweiten weiteren Parameter repräsentierten simulierten oder berechneten Betriebspunkt der jeweils anderen Einrichtung von dem tatsächlichen Betriebspunkt der jeweiligen Einrichtung minimiert werden. Dadurch steigt die Exaktheit der Leistungserbringung und ein möglicher regulatorischer Rahmen kann durch die exaktere Leistungsstellung weiter für die Optimierung anderer Eigenschaften, beispielsweise eines Verschleißes des Bereitstellungssystems, ausgenutzt werden. Hierfür ist vorteilhafterweise nur eine langsame oder temporär verfügbare Datenverbindung, also eine "schlechte" und kostengünstige Datenverbindung erforderlich. Das Bereitstellungssystem kann somit auch in einer Umgebung mit schlecht ausgebauter Dateninfrastruktur zuverlässig und genau funktionieren. Insbesondere ist es also bereits ausreichend, wenn die Information einen bereits vergangenen, also nicht mehr aktuellen Betriebspunkt der jeweils anderen Einrichtung repräsentiert, da die Information beispielsweise mit in einer Datenspeichereinrichtung gespeicherten Information über einen vergangenen berechneten oder simulierten Betriebspunkt verglichen und aus einer eventuellen Abweichung auch ein Rückschluss über eine Abweichung eines aktuellen berechneten von einem tatsächlichen aktuellen Betriebspunkt ermittelt werden kann.

In einer weiteren vorteilhaften Ausführungsform ist vorgesehen, dass das Bereitstellungssystem zum Bereitstellen einer Primärregelleistung und/oder Sekundärleistung ausgebildet ist. Für ein solches Bereitstellungssystem ist die beschriebene Struktur für ein Bereitstellungssystem besonders vorteilhaft, da die einschlägigen regulatorischen Vorschriften mit einer verlängerten Lebensdauer und Einrichtungen, welche ohne die beschriebene Ausgestaltung nicht zum Bereitstellen einer Primärregelleistung und/oder Sekundärleistung geeignet wären, erreicht beziehungsweise erfüllt werden.

In einer weiteren vorteilhaften Ausführungsform ist vorgesehen, dass das Energieversorgungsnetz ein Wechselstromnetz umfasst oder ist und der Regelparameter eine Netzfrequenz des Wechselstromnetzes umfasst oder ist. Da gerade Wechselstrom-Energieversorgungsnetze besonders groß sind, ist hier der Bedarf an Primärregelleistung oder Regelleistung besonders groß, sodass das Bereitstellungssystem hier besonders vorteilhaft zur Anwendung kommt.

In einer alternativen Ausführungsform ist hier vorgesehen, dass das Energieversorgungsnetz ein Gleichstromnetz, insbesondere ein Hochspannungs-Gleichstromnetz, umfasst oder ist und der Regelparameter eine Spannung des Gleichstromnetzes umfasst oder ist. Auch hier ist das beschriebene Bereitstellungssystem besonders vorteilhaft, da die Zuverlässigkeit des Netzes bei geringem Aufwand für die Datenverbindung gesteigert wird.

Ein weiterer Aspekt der Erfindung betrifft eine Einrichtung zum Bereitstellen einer elektrischen Leistung, insbesondere einer elektrischen Regelleistung, an ein Energieversorgungsnetz. Insbesondere kann die Einrichtung für ein Bereitstellungssystem nach einer der geschilderten Ausführungsformen ausgebildet sein, beispielsweise als Energiespeichereinrichtung oder als Kraftwerkseinrichtung.

Die Einrichtung umfasst hier eine Messeinrichtung zum Messen eines Regelparameters des Energieversorgungsnetzes sowie eine ausschließlich der Einrichtung zugeordnete Regeleinrichtung zum Regeln (insbesondere ausschließlich) einer von der Einrichtung an das Energieversorgungsnetz bereitgestellten elektrischen Leistung in Abhängigkeit von dem gemessenen Regelparameter. Dabei ist in der Regeleinrichtung zumindest ein weiterer Parameter hinterlegt, welcher einen Betriebspunkt zumindest einer von der der Regeleinrichtung zugeordneten Einrichtung verschiedenen weiteren Einrichtung zum Bereitstellen einer elektrischen Leistung an das Energieversorgungsnetz repräsentiert, und die Regeleinrichtung ist ausgebildet, die von der der Regeleinrichtung zugeordneten Einrichtung bereitgestellte Leistung auch in Abhängigkeit von dem weiteren Parameter zu regeln.

Das hat den Vorteil, dass die Einrichtung nicht nur einen eigenen Betriebspunkt sowie einen Betriebspunkt oder Zustand des Energieversorgungsnetzes bei der Bereitstellung der elektrischen Leistung an das Energieversorgungsnetz berücksichtigen kann, sondern auch den Betriebspunkt einer oder mehrerer weiterer Einrichtungen zum Bereitstellen einer elektrischen Leistung, insbesondere einer Regelleistung, an das Energieversorgungsnetz. Damit kann bei dem Bereitstellen der elektrischen Leistung diese mit einer besonders großen Genauigkeit bereitgestellt werden beziehungsweise Einflüsse der anderen Einrichtung oder Einrichtungen auf das Energieversorgungsnetz mitberücksichtigt werden, sodass eine elektrische Leistung insgesamt flexibler und genauer an das Energieversorgungsnetz bereitgestellt wird, welches somit in seiner Stabilität und Fehlerresistenz unterstützt wird. Somit wird auch einem teilweisen oder ganzen Ausfall des Energieversorgungsnetzes vorgebeugt.

Weitere Vorteile und vorteilhafte Ausführungsformen entsprechen hier Vorteilen und vorteilhaften Ausführungsformen des beschriebenen Bereitstellungssystems.

Die Erfindung betrifft auch ein Verfahren zum Bereitstellen einer elektrischen Leistung, insbesondere einer elektrischen Regelleistung, an ein Energieversorgungsnetz. Ein Verfahrensschritt ist dabei ein Messen eines Regelparameters des Energieversorgungsnetzes durch eine (erste) Messeinrichtung einer (ersten) Einrichtung zum Bereitstellen einer elektrischen Leistung an das Energieversorgungsnetz. Ein weiterer Verfahrensschritt ist ein Regeln einer von der (ersten) Einrichtung an das Energieversorgungsnetz bereitgestellten Leistung durch eine ausschließlich der (ersten) Einrichtung zugeordnete (erste) Regeleinrichtung in Abhängigkeit von dem gemessenen Regelparameter sowie in Abhängigkeit von zumindest einem in der Regeleinrichtung hinterlegten weiteren Parameter, welcher einen Betriebspunkt einer von der der Regeleinrichtung zugeordneten (ersten) Einrichtung verschiedenen weiteren (zweiten) Einrichtung zum Bereitstellen einer elektrischen Leistung an das Energieversorgungsnetz repräsentiert.

Vorteile und vorteilhafte Ausführungsformen entsprechen hier Vorteilen und vorteilhaften Ausführungsformen der beschriebenen Einrichtung und des beschriebenen Bereitstellungssystems.

In einer vorteilhaften Ausführungsform ist hier vorgesehen, dass als weiterer Verfahrensschritt ein Messen des Regelparameters des Energieversorgungsnetzes durch eine (zweite) Messeinrichtung der von der einen verschiedenen weiteren (zweiten) Einrichtung zum Bereitstellen einer elektrischen Leistung eines Energieversorgungsnetzes durchgeführt wird, sowie als zusätzlicher Verfahrensschritt ein Regeln einer von der weiteren (zweiten) Einrichtung an das Energieversorgungsnetz bereitgestellten Leistung durch eine ausschließlich der weiteren (zweiten) Einrichtung zugeordnete (zweite) Regeleinrichtung in Abhängigkeit von dem gemessenen Regelparameter.

Vorteile und vorteilhafte Ausführungsformen entsprechen den Vorteilen und vorteilhaften Ausführungsformen des beschriebenen Bereitstellungssystems.

Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Ausführungsbeispiele der Erfindung werden nachfolgend anhand schematischer Zeichnungen näher erläutert. In
- Fig. 1: ist eine beispielhafte Ausführungsform eines Bereitstellungssystems zum Bereitstellen von einer elektrischen Regelleistung an ein Energieversorgungsnetz dargestellt; und in
- Fig. 2: eine beispielhafte Ausführungsform einer Einrichtung zum Bereitstellen einer elektrischen Leistung an ein Energieversorgungsnetz.

Gleiche oder funktionsgleiche Komponenten werden dabei mit den gleichen oder funktionsgleichen Bezugszeichen versehen.

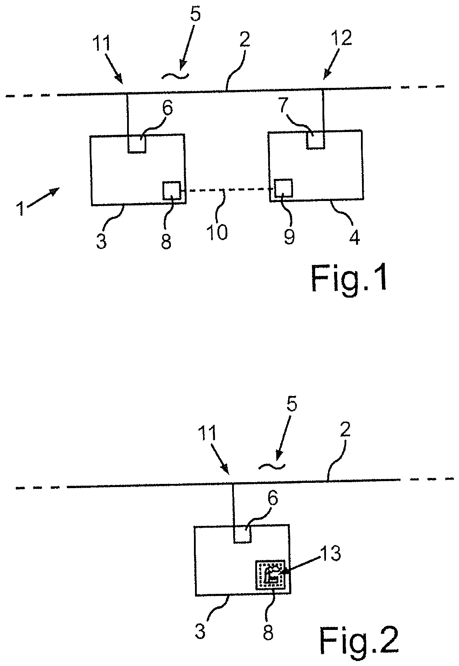

In Fig. 1 ist eine beispielhafte Ausführungsform eines Bereitstellungssystems zum Bereitstellen einer elektrischen Leistung an ein Energieversorgungsnetz dargestellt. Das Bereitstellungssystem 1 dient dabei vorliegend dem Bereitstellen einer Regelleistung, beispielsweise einer Primärregelleistung, an ein Energieversorgungsnetz 2. Das Bereitstellungssystem 1 weist dabei eine erste Einrichtung 3 zum Bereitstellen einer elektrischen Leistung sowie eine zweite Einrichtung 4 zum Bereitstellen einer elektrischen Leistung auf. Die erste Einrichtung 3 ist dabei vorliegend als Energiespeichereinrichtung zum Speichern einer elektrischen Energie ausgebildet und die zweite Einrichtung 4 als Kraftwerkseinrichtung zum Erzeugen einer elektrischen Energie. Das Energieversorgungsnetz 2 ist vorliegend als Wechselstromenergieversorgungsnetz mit einer Netzfrequenz als Regelparameter 5 ausgebildet. Vorliegend ist die erste Einrichtung 3 über einen eigenen Anschluss 11 sowie die zweite Einrichtung 4 über einen weiteren eigenen Anschluss 12 an das Energieversorgungsnetz 2 angeschlossen.

Die erste Einrichtung 3 weist dabei eine erste Messeinrichtung 6 zum Messen des Regelparameters 5, also der Netzfrequenz des Energieversorgungsnetzes 2, auf. Auch die zweite Einrichtung 4 weist eine (zweite) Messeinrichtung 7 zum Messen des Regelparameters 5 auf. Zusätzlich weisen die beiden Einrichtungen 3, 4 je eine jeweils individuell ausschließlich der entsprechenden Einrichtung 3, 4 zugeordnete (erste beziehungsweise zweite) Regeleinrichtung 8, 9 zum Regeln einer von der jeweiligen Einrichtung 3, 4 an das Energieversorgungsnetz 2 bereitgestellten Leistung in Abhängigkeit von dem gemessenen Regelparameter 5 auf.

Dabei ist in der vorliegenden Regeleinrichtung 8 der als Energiespeichereinrichtung ausgeführten ersten Einrichtung 3 ein weiterer Parameter hinterlegt, welcher einen Betriebspunkt der zweiten Einrichtung 4, hier der Kraftwerkseinrichtung, repräsentiert. Umgekehrt ist vorliegend auch in der zweiten Regeleinrichtung 9 ein zweiter weiterer Parameter hinterlegt, welcher einen Betriebspunkt der als Energiespeichereinrichtung ausgeführten ersten Einrichtung 3 repräsentiert. Erste beziehungsweise zweite Regeleinrichtung 8, 9 sind hierbei ausgebildet, die von der ersten beziehungsweise zweiten Einrichtung 3, 4 bereitgestellte Leistung in Abhängigkeit von dem durch die jeweilige Messeinrichtung 6, 7 gemessenen Regelparameter 5 und zusätzlich in Abhängigkeit von dem ersten beziehungsweise zweiten weiteren Parameter zu regeln.

Der erste und/oder zweite weitere Parameter kann dabei jeweils aus einem in der ersten Regeleinrichtung 8 beziehungsweise zweiten Regeleinrichtung 9 hinterlegten Rechenmodell 13 (Fig. 2) für die zweite Einrichtung 4 beziehungsweise erste Einrichtung 3 abgeleitet werden.

Die jeweiligen Regeleinrichtungen 8, 9 haben also aufgrund des Rechenmodells eine Kenntnis über den Betriebszustand der jeweils anderen Einrichtung 4 beziehungsweise 3. Mittels des Rechenmodells wird in Abhängigkeit von dem jeweils lokal durch die jeweilige Messeinrichtung 6, 7 gemessenen Regelparameter der angenommene Betriebszustand der jeweils anderen Einrichtung 4, 3 aktualisiert und entsprechend der jeweilige weitere Parameter angepasst, sodass von dem Gesamtsystem aus erster und zweiter Einrichtung 3, 4 stets die gewünschte Regelleistung bereitgestellt wird. Alternativ oder ergänzend, vorliegend ergänzend, kann auch eine Information über den jeweiligen Betriebszustand der ersten beziehungsweise zweiten Einrichtung 3, 4 über eine Datenverbindung 10 zwischen den beiden Regeleinrichtungen ausgetauscht werden. Selbstverständlich kann auch nur eine Information über den Betriebszustand der einen Einrichtung, beispielsweise der zweiten Einrichtung 4, an die andere Einrichtung, beispielsweise die erste Einrichtung 3, übermittelt werden. Diese Information kann dann entweder genutzt werden, um den weiteren Parameter einzustellen oder vorzugeben, oder aber, wie vorliegend, um das Rechenmodell zu überprüfen.

Dabei genügt eine Übermittlung der Information in Zeitabständen, wie sie für ein direktes Regeln der jeweiligen Einrichtung, also beispielsweise der ersten Einrichtung 3, durch die Regeleinrichtung der anderen Einrichtung, also beispielsweise der Regeleinrichtung 9 der zweiten Einrichtung 4, nicht ausreichen würde. Beispielsweise kann es so vollkommen ausreichend sein, wenn einmal in einer Stunde oder einmal an einem Tag eine Funktion über den jeweiligen Betriebspunkt über die Datenvermittlung 10 übermittelt wird. Entsprechend muss die Datenverbindung 10 auch nicht dauerhaft bestehen, sondern kann vielmehr bedarfsweise für jedes einzelne Übermitteln der entsprechenden Information aufgebaut und danach wieder abgebaut werden.

In Fig. 2 ist eine beispielhafte Ausführungsform einer Einrichtung zum Bereitstellen einer elektrischen Leistung an ein Energieversorgungsnetz 2 dargestellt. Die gezeigte Einrichtung entspricht dabei vorliegend der in Fig. 1 gezeigten ersten Einrichtung 3 und ist ebenfalls als Energiespeichereinrichtung ausgeführt. Das in der Regeleinrichtung 8 hinterlegte Rechenmodell 13 betrifft im vorliegenden Beispiel eine Kraftwerkseinrichtung, hier eine als Kraftwerk ausgeführte Kraftwerkseinrichtung. Dabei besteht vorliegend keine Datenverbindung 10 zu weiteren Einrichtungen zum Bereitstellen einer elektrischen Leistung an das Energieversorgungsnetz, die Einrichtung 3 stellt die Leistung, vorliegend die Regelleistung, somit ausschließlich in Abhängigkeit des durch die Messeinrichtung 6 gemessenen Regelparameters 5 sowie des aus dem Rechenmodell 13 abgeleiteten hinterlegten weiteren Parameters zur Verfügung.

## Patentansprüche

1. Bereitstellungssystem (1) zum Bereitstellen von einer elektrischen Leistung, insbesondere zum Bereitstellen einer Regelleistung, an ein Energieversorgungsnetz (2), mit
- einer ersten Einrichtung (3) zum Bereitstellen einer elektrischen Leistung;
- einer zweiten Einrichtung (4) zum Bereitstellen einer elektrischen Leistung;
wobei
- die erste Einrichtung (3) a) eine erste Messeinrichtung (6) zum Messen eines Regelparameters (5) des Energieversorgungsnetzes (2) und b) eine erste lokale Regeleinrichtung (8) zum Regeln einer von der ersten Einrichtung (3) an das Energieversorgungsnetz (2) bereitgestellten Leistung in Abhängigkeit von dem gemessenen Regelparameter (5) aufweist; und
in der ersten Regeleinrichtung (8) zumindest ein erster weiterer Parameter hinterlegt ist, welcher einen Betriebspunkt der zweiten Einrichtung (4) repräsentiert, und die erste Regeleinrichtung (8) ausgebildet ist, die von der ersten Einrichtung (3) bereitgestellte Leistung auch in Abhängigkeit von dem ersten weiteren Parameter zu regeln;
und wobei
- die zweite Einrichtung (4) a) eine zweite Messeinrichtung (7) zum Messen des Regelparameters (5) des Energieversorgungsnetzes (2) und b) eine von der ersten verschiedene zweite lokale Regeleinrichtung (9) zum Regeln einer von der zweiten Einrichtung (4) an das Energieversorgungsnetz (2) bereitgestellten Leistung in Abhängigkeit von dem gemessenen Regelparameter (5) aufweist,
wobei in der ersten Regeleinrichtung (8) ein Rechenmodell(13) für die zweite Einrichtung (4) hinterlegt ist, und der in der ersten Regeleinrichtung (8) hinterlegte Parameter aus dem Rechenmodell (13) in Abhängigkeit von dem gemessenen Regelparameter (5) abgeleitet ist; **dadurch gekennzeichnet, dass**
zumindest die zweite Einrichtung (4) eine Energiespeicheinrichtung umfasst und in dem in der Regeleinrichtung (8), welche der ersten Einrichtung (3) zugeordnet ist, hinterlegten Rechenmodell (13) für einen Betrieb der Energiespeichereinrichtung ein in der Energiespeichereinrichtung auftretender energetischer Verlust vorgegeben ist, um den in der Energiespeichereinrichtung auftretenden energetischen Verlust durch Leistungserbringung oder Leistungsbereitstellung der ersten Einrichtung (3) auszugleichen [S13Z24-26].

2. Bereitstellungssystem (1) nach Anspruch 1,
**dadurch gekennzeichnet, dass**
in der zweiten Regeleinrichtung (9) zumindest ein zweiter weiterer Parameter hinterlegt ist, weicher einen Betriebspunkt der ersten Einrichtung (3) repräsentiert, und die zweite Regeleinrichtung (9) ausgebildet ist, die von der zweiten Einrichtung (4) bereitgestellte Leistung auch in Abhängigkeit von dem zweiten weiteren Parameter zu regeln.

3. Bereitstellungssystem (1) nach einem der vorhergehenden Ansprüche,
**dadurch gekennzeichnet, dass**
die erste Einrichtung (3) zumindest eine Energiespeichereinrichtung zum Speichern elektrischer Energie oder Kraftwerkseinrichtung zum Erzeugen elektrischer Energie umfasst und die zweite Einrichtung (4) zumindest eine Energiespeichereinrichtung zum Speichern elektrischer Energie oder Kraftwerkseinrichtung zum Erzeugen elektrischer Energie umfasst.

4. Bereitstellungssystem (1) nach einem der vorhergehenden Ansprüche,
**dadurch gekennzeichnet, dass**
die erste Einrichtung (3) mit einem eigenen ersten Anschluss (11) an das Energieversorgungsnetz (2) angeschlossen ist und die zweite Einrichtung (4) mit einem von dem ersten verschiedenen eigenen zweiten Anschluss (12) an das Energieversorgungsnetz (2) angeschlossen ist.

5. Bereitstellungssystem (1) nach Anspruch 2,
**dadurch gekennzeichnet, dass**
in der zweiten Regeleinrichtung (9) ein Rechenmodell für die erste Einrichtung (3) hinterlegt ist, und der in der zweiten Regeleinrichtung (9) hinterlegte Parameter aus dem Rechenmodell in Abhängigkeit von dem gemessenen Regelparameter (5) abgeleitet ist.

6. Bereitstellungssystem (1) nach Anspruch 5,
**dadurch gekennzeichnet, dass**
die erste Einrichtung (3) eine Energiespeicheinrichtung umfasst und in dem in der Regeleinrichtung (9, 8), welche der zweiten Einrichtung (4) zugeordnet ist, hinterlegten Rechenmodell (13) für einen Betrieb der Energiespeichereinrichtung ein in der Energiespeichereinrichtung auftretender energetischer Verlust vorgegeben ist.

7. Bereitstellungssystem (1) nach einem der vorhergehenden Ansprüche,
**dadurch gekennzeichnet, dass**
zumindest eine der Einrichtungen (3, 4) ausgebildet ist, über eine entsprechende Datenverbindung (10) eine Information über den Betriebspunkt der jeweils anderen Einrichtung (4, 3) abzurufen und den hinterlegten Parameter oder das hinterlegte Rechenmodell (13) an die abgerufene Information anzupassen.

8. Bereitstellungssystem (1) nach einem der vorhergehenden Ansprüche,
**dadurch gekennzeichnet, dass**
das Bereitstellungssystem (1) zum Bereitstellen einer Primärregelleistung und/oder einer Sekundärregeleistung ausgebildet ist.

9. Bereitstellungssystem (1) nach einem der vorhergehenden Ansprüche,
**dadurch gekennzeichnet, dass**
das Energieversorgungsnetz (2) ein Wechselstromnetz umfasst und der Regelparameter (5) eine Netzfrequenz des Wechselstromnetzes umfasst.

10. Einrichtung (3, 4) zum Bereitstellen einer elektrischen Leistung, insbesondere einer elektrischen Regelleistung, an ein Energieversorgungsnetz (2), insbesondere für ein Bereitstellungssystem (1) nach einem der vorhergehenden Ansprüche,
**dadurch gekennzeichnet, dass**
die Einrichtung (3, 4) a) eine Messeinrichtung (6, 7) zum Messen eines Regelparameters (5) des Energieversorgungsnetzes (2) und b) eine ausschließlich der Einrichtung (3, 4) zugeordnete Regeleinrichtung (8, 9) zum Regeln einer von der Einrichtung (3, 4) an das Energieversorgungsnetz (2) bereitgestellten Leistung in Abhängigkeit von dem gemessenen Regelparameter (5) aufweist; wobei
in der Regeleinrichtung (8, 9) zumindest ein weiterer Parameter hinterlegt ist, welcher einen Betriebspunkt einer von der der Regeleinrichtung (8, 9) zugeordneten Einrichtung (3, 4) verschiedenen weiteren Einrichtung (4, 3) zum Bereitstellen einer elektrischen Leistung an das Energieversorgungsnetz (2) repräsentiert, welche eine Energiespeicheinrichtung umfasst,
und die Regeleinrichtung (8, 9) ausgebildet ist, die von der der Regeleinrichtung (8, 9) zugeordneten Einrichtung (3, 4) bereitgestellte Leistung auch in Abhängigkeit von dem weiteren Parameter zu regeln,
wobei in der Regeleinrichtung (8) ein Rechenmodell(13) für die weitere Einrichtung (4) hinterlegt ist, und der in der Regeleinrichtung (8) hinterlegte Parameter aus dem Rechenmodell (13) in Abhängigkeit von dem gemessenen Regelparameter (5) abgeleitet ist;
**dadurch gekennzeichnet, dass**
in dem in der Regeleinrichtung (8) hinterlegten Rechenmodell (13) für einen Betrieb der Energiespeichereinrichtung ein in der Energiespeichereinrichtung auftretender energetischer Verlust vorgegeben ist, um den in der Energiespeichereinrichtung auftretenden energetischen Verlust durch Leistungserbringung oder Leistungsbereitstellung der ersten Einrichtung auszugleichen.

11. Verfahren zum Bereitstellen einer elektrischen Leistung, insbesondere einer elektrischen Regelleistung, an ein Energieversorgungsnetz (2), mit den Verfahrensschritten:
- Messen eines Regelparameters (5) des Energieversorgungsnetzes (2) durch eine Messeinrichtung (6, 7) einer Einrichtung (3, 4) zum Bereitstellen einer elektrischen Leistung an das Energieversorgungsnetz;
- Ableiten zumindest eines weiteren hinterlegten Parameters, welcher einen Betriebspunkt einer von der der Regeleinrichtung (8, 9) zugeordneten Einrichtung (3, 4) verschiedenen weiteren Einrichtung (4, 3) zum Bereitstellen einer elektrischen Leistung an das Energieversorgungsnetz (2) repräsentiert, welche eine Energiespeicheinrichtung umfasst, durch eine ausschließlich der Einrichtung (3, 4) zugeordnete Regeleinrichtung (8, 9) aus einem in der Regeleinrichtung (8) hinterlegte Rechenmodell (13) für die weitere Einrichtung (4) in Abhängigkeit von dem gemessenen Regelparameter (5)
- Regeln einer von der Einrichtung (3, 4) an das Energieversorgungsnetz (2) bereitgestellten Leistung durch die ausschließlich der Einrichtung (3, 4) zugeordnete Regeleinrichtung (8, 9) in Abhängigkeit von dem gemessenen Regelparameter (5) sowie in Abhängigkeit von dem zumindest einem weiteren in der Regeleinrichtung (8, 9) hinterlegten Parameter, **gekennzeichnet durch** ein
- Ausgleichen des in der Energiespeichereinrichtung auftretenden energetischen Verlusts durch Leistungserbringung oder Leistungsbereitstellung der ersten Einrichtung, wofür in dem in der Regeleinrichtung (8) hinterlegten Rechenmodell (13) für einen Betrieb der Energiespeichereinrichtung ein in der Energiespeichereinrichtung auftretender energetischer Verlust vorgegeben ist.

12. Verfahren nach Anspruch 11,
**gekennzeichnet durch** die Verfahrensschritte:
- Messen des Regelparameters (5) des Energieversorgungsnetzes (2) durch eine Messeinrichtung (7, 6) der von der einen verschiedenen weiteren Einrichtung (4, 3) zum Bereitstellen einer elektrischen Leistung an das Energieversorgungsnetz;
- Regeln einer von der weiteren Einrichtung (4, 3) an das Energieversorgungsnetz (2) bereitgestellten Leistung durch eine ausschließlich der weiteren Einrichtung (4, 3) zugeordnete Regeleinrichtung (9, 8) in Abhängigkeit von dem gemessenen Regelparameter (5).

## Claims

1. A provisioning system (1) for providing an electrical power, in particular for providing a balancing power, to a power grid (2), comprising
- a first device (3) for providing an electrical power;
- a second device (4) for providing an electrical power,
wherein
- the first device (3) has a) a first measuring device (6) for measuring a control parameter (5) of the power grid (2) and b) a first local control device (8) for controlling a power provided to the power grid (2) by the first device (3) in dependence on the measured control parameter (5); and
at least one first further parameter that represents an operating point of the second device (4) is stored in the first control device (8) and the first control device (8) is configured also to control the power provided by the first device (3) in dependence on the first further parameter;
and wherein
- the second device (4) has a) a second measuring device (7) for measuring the control parameter (5) of the power grid (2) and b) a second local control device (9), different from the first local control device, to control a power provided to the power grid (2) by the second device (4) in dependence on the measured control parameter (5);
wherein a mathematical model (13) for the second device (4) is stored in the first control device (8) and the parameter stored in the first control device (8) is derived from the mathematical model (13) in dependence on the measured control parameter (5),
**characterized in that**
at least the second device (4) comprises an energy storage device and an energetic loss occurring in the energy storage device is specified in the mathematical model (13) for an operation of the energy storage device, said mathematical model (13) being stored in the control device (8) that is associated with the first device (3), to balance the energetic loss occurring in the energy storage device by power delivery or power provision of the first device (3).

2. An provisioning system (1) in accordance with claim 1,
**characterized in that**
at least one second further parameter that represents an operating point of the first device (3) is stored in the second control device (9) and the second control device (9) is configured also to control the power provided by the second device (4) in dependence on the second further parameter.

3. A provisioning system (1) in accordance with one of the preceding claims,
**characterized in that**
the first device (3) comprises at least one energy storage device for storing electrical energy or a power plant device for generating electrical energy; and **in that** the second device (4) comprises at least one energy storage device for storing electrical energy or a power plant device for generating electrical energy.

4. A provisioning system (1) in accordance with one of the preceding claims,
**characterized in that**
the first device (3) is connected to the power grid (2) by a dedicated first connector (11) and the second device (4) is connected to the power grid (2) by a dedicated second connector (12) different from the first connector.

5. A provisioning system (1) in accordance with claim 2,
**characterized in that**
a mathematical model for the first device (3) is stored in the second control device (9) and the parameter stored in the second control device (9) is derived from the mathematical model in dependence on the measured control parameter (5).

6. A provisioning system (1) in accordance with claim 5,
**characterized in that**
the first device (3) comprises an energy storage device and an energetic loss occurring in the energy storage device is specified in the mathematical model (13) for an operation of the energy storage device stored in the control device (9, 8) that is associated with the second device (4).

7. A provisioning system (1) in accordance with one of the preceding claims,
**characterized in that**
at least one of the devices (3, 4) is configured to retrieve a piece of information on the operating point of the respective other device (4, 3) over a corresponding data connection and to adapt the stored parameter or the stored mathematical model (13) to the piece of information retrieved.

8. A provisioning system (1) in accordance with one of the preceding claims,
**characterized in that**
the provisioning system (1) is configured to provide a primary balancing power and/or a secondary balancing power.

9. A provisioning system (1) in accordance with one of the preceding claims,
**characterized in that**
the power grid (2) comprises an A.C. network and the control parameter (5) comprises a mains frequency of the A.C. network.

10. A device (3, 4) for providing an electrical power, in particular an electrical balancing power, to a power grid (2), in particular for a provisioning system (1) in accordance with one of the preceding claims,
**characterized in that**
the device (3, 4) has a) a measuring device (6, 7) for measuring a control parameter (5) of the power grid (2) and b) a control device (8, 9) exclusively associated with the device (3, 4) for controlling a power provided to the power grid (2) by the device (3, 4) in dependence on the measured control parameter (5), with
at least one further parameter being stored in the control device (8, 9) that represents an operating point of a further device (4, 3) different from the device (3, 4) associated with the control device (8, 9) for providing an electrical power to the power grid (2), said further device (4, 3) comprising an energy storage device, and with the control device (8, 9) being configured to also control the power provided by the device (3, 4) associated with the control device (8, 9) in dependence on the further parameter;
wherein a mathematical model (13) for the second device (4) is stored in the control device (8) and the parameter stored in the control device is derived from the mathematical model (13) in dependence on the measured control parameter (5),
**characterized in that**
an energetic loss occurring in the energy storage device is specified in the mathematical model (13) for an operation of the energy storage device, said mathematical model (13) being stored in the control device (8), to balance the energetic loss occurring in the energy storage device by power delivery or power provision of the first device.

11. A method of providing an electrical power, in particular an electrical balancing power, to a power grid (2), comprising the method steps:
- measuring a control parameter (5) of the power grid (2) by a measuring device (6, 7) of a device (3, 4) for providing an electrical power to the power grid;
- deriving at least one further stored parameter that represents an operating point of a further device (4, 3) different from the device (3, 4) associated with the control device (8, 9) for providing an electrical power to the power grid (2), said further device (4, 3) comprising an energy storage device, from a mathematical model (13) for the further device (4) stored in the control device (8) by a control device (8, 9) exclusively associated with the device (3, 4) in dependence on the measured control parameter (5);
- controlling a power provided to the power grid (2) by the device (3, 4) by the control device (8, 9) exclusively associated with the device (3, 4) in dependence on the measured control parameter (5) and in dependence on the at least one further parameter stored in the control device (8, 9), **characterized by** a
- balancing of the energetic loss occurring in the energy storage device by power delivery or power provision of the first device,
for which purpose an energetic loss occurring in the energy storage device is specified in the mathematical model (13) stored in the control device (8) for an operation of the energy storage device.

12. A method in accordance with claim 11,
**characterized by** the method steps:
- measuring the control parameter (5) of the power grid (2) by a measuring device (7, 6) of the further device (4, 3) differing from the one device for providing an electrical power to the power grid; and
- controlling a power provided to the power grid (2) by the further device (4, 3) by a control device (9, 8) exclusively associated with the further device (4, 3) in dependence on the measured control parameter (5).

## Revendications

1. Système de fourniture (1) destiné fournir une puissance électrique, en particulier à fournir une puissance de régulation, à un réseau d'alimentation en énergie (2), avec
- un premier dispositif (3) destiné à fournir une puissance électrique ;
- un deuxième dispositif (4) destiné à fournir une puissance électrique ;
- le premier dispositif (3) comportant a) un premier dispositif de mesure (6) destiné à mesurer un paramètre de régulation (5) du réseau d'alimentation en énergie (2) et b) un premier dispositif de régulation (8) local destiné à réguler une puissance fournie au réseau d'alimentation en énergie (2) par le premier dispositif (3) en fonction du paramètre de régulation (5) mesuré ; et,
dans le premier dispositif de régulation (8), au moins un premier autre paramètre étant enregistré, lequel représente un point de fonctionnement du deuxième dispositif (4), et le premier dispositif de régulation (8) étant constitué pour réguler la puissance fournie par le premier dispositif (3) également en fonction du premier autre paramètre ; et
- le deuxième dispositif (4) comportant a) un deuxième dispositif de mesure (7) destiné à mesurer le paramètre de régulation (5) du réseau d'alimentation en énergie (2) et b) un deuxième dispositif de régulation (9) local différent du premier et destiné à réguler une puissance fournie au réseau d'alimentation en énergie (2) par le deuxième dispositif (4) en fonction du paramètre de régulation (5) mesuré,
un modèle de calcul (13) pour le deuxième dispositif (4) étant enregistré dans le premier dispositif de régulation (8), et le paramètre enregistré dans le premier dispositif de régulation (8) étant dérivé du modèle de calcul (13) en fonction du paramètre de régulation (5) mesuré ;
**caractérisé en ce que**
au moins le deuxième dispositif (4) comprend un dispositif d'accumulation d'énergie et, dans le modèle de calcul (13), enregistré dans le dispositif de régulation (8) pour un fonctionnement du dispositif d'accumulation d'énergie qui est affecté au premier dispositif (3), il est prescrit une perte en énergie survenant dans le dispositif d'accumulation d'énergie afin de compenser la perte énergétique survenant dans le dispositif d'accumulation d'énergie par une délivrance de puissance ou une fourniture de puissance du premier dispositif (3).

2. Système de fourniture (1) selon la revendication 1,
**caractérisé en ce que**,
dans le deuxième dispositif de régulation (9), au moins un deuxième autre paramètre est enregistré, lequel représente un point de fonctionnement du premier dispositif (3), et le deuxième dispositif de régulation (9) est constitué pour réguler la puissance fournie par le deuxième dispositif (4) également en fonction du deuxième autre paramètre.

3. Système de fourniture (1) selon l'une des revendications précédentes,
**caractérisé en ce que**
le premier dispositif (3) comprend au moins un dispositif d'accumulation d'énergie destiné à accumuler de l'énergie électrique ou un dispositif de centrale électrique destiné à produire de l'énergie électrique, et le deuxième dispositif (4) comprend au moins un dispositif d'accumulation d'énergie destiné à accumuler de l'énergie électrique ou un dispositif de centrale électrique destiné à produire de l'énergie électrique.

4. Système de fourniture (1) selon l'une des revendications précédentes,
**caractérisé en ce que**
le premier dispositif (3) est connecté au réseau d'alimentation en énergie (2) par une première connexion (11) propre, et le deuxième dispositif (4) est connecté au réseau d'alimentation en énergie (2) par une deuxième connexion (12) propre différente de la première.

5. Système de fourniture (1) selon la revendication 2,
**caractérisé en ce**
**qu'**un modèle de calcul pour le premier dispositif (3) est enregistré dans le deuxième dispositif de régulation (9), et le paramètre enregistré dans le deuxième dispositif de régulation (9) est dérivé du modèle de calcul en fonction du paramètre de régulation (5) mesuré.

6. Système de fourniture (1) selon la revendication 5,
**caractérisé en ce que**
le premier dispositif (3) comprend un dispositif d'accumulation d'énergie et, dans le modèle de calcul (13), enregistré dans le dispositif de régulation (9,8) pour un fonctionnement du dispositif d'accumulation d'énergie qui est affecté au deuxième dispositif (4), il est prescrit une perte énergétique survenant dans le dispositif d'accumulation d'énergie.

7. Système de fourniture (1) selon l'une des revendications précédentes,
**caractérisé en ce que**
au moins un des dispositifs (3, 4) est constitué pour, par le biais d'une liaison de données (10) correspondante, appeler une information sur le point de fonctionnement de respectivement l'autre dispositif (4, 3) et pour adapter le paramètre enregistré ou le modèle de calcul (13) enregistré à l'information appelée.

8. Système de fourniture (1) selon l'une des revendications précédentes,
**caractérisé en ce que**
le système de fourniture (1) est constitué pour fournir une puissance de régulation primaire et/ou une puissance de régulation secondaire.

9. Système de fourniture (1) selon l'une des revendications précédentes,
**caractérisé en ce que**
le réseau d'alimentation en énergie (2) comprend un réseau de courant alternatif, et le paramètre de régulation (5) comprend une fréquence de réseau du réseau de courant alternatif.

10. Dispositif (3, 4) destiné à fournir une puissance électrique, en particulier une puissance de régulation électrique, à un réseau d'alimentation en énergie (2), en particulier pour un système de fourniture (1) selon l'une des revendications précédentes,
**caractérisé en ce que**
le dispositif (3, 4) comporte a) un dispositif de mesure (6, 7) destiné à mesurer un paramètre de régulation (5) du réseau d'alimentation en énergie (2) et b) un dispositif de régulation (8, 9) affecté exclusivement au dispositif (3, 4) pour réguler une puissance fournie par le dispositif (3, 4) au réseau d'alimentation en énergie (2) en fonction du paramètre de régulation (5) mesuré ;
au moins un autre paramètre étant disposé dans le dispositif de régulation (8, 9) et représentant un point de fonctionnement d'un autre dispositif (4, 3), différent du dispositif (3, 4) affecté au dispositif de régulation (8, 9), pour fournir une puissance électrique au réseau d'alimentation en énergie (2), lequel autre dispositif comprend un dispositif d'accumulation d'énergie, et le dispositif de régulation (8, 9) étant constitué pour réguler la puissance fournie par le dispositif (3, 4) affecté au dispositif de régulation (8, 9) également en fonction de l'autre paramètre,
un modèle de calcul (13) étant enregistré dans le dispositif de régulation (8) pour l'autre dispositif (4), et le paramètre enregistré dans le dispositif de régulation (8) étant dérivé du modèle de calcul (13) en fonction du paramètre de régulation (5) mesuré ;
**caractérisé en ce que**,
dans le modèle de calcul (13) enregistré dans le dispositif de régulation (8) pour un fonctionnement du dispositif d'accumulation d'énergie, une perte énergétique survenant dans le dispositif d'accumulation d'énergie est prescrite dans le modèle de calcul (13) afin de compenser la perte énergétique survenant dans le dispositif d'accumulation d'énergie par une délivrance de puissance ou une fourniture de puissance du premier dispositif.

11. Procédé de fourniture d'une puissance électrique, en particulier d'une puissance de régulation électrique, à un réseau d'alimentation en énergie (2), avec les étapes de procédé :
- mesurage d'un paramètre de régulation (5) du réseau d'alimentation en énergie (2) par un dispositif de mesure (6, 7) d'un dispositif (3, 4) pour fournir une puissance électrique au réseau d'alimentation en énergie ;
- dérivation d'au moins un autre paramètre enregistré qui représente un point de fonctionnement d'un autre dispositif (4, 3) différent du dispositif (3, 4) affecté au dispositif de régulation (8, 9) pour fournir une puissance électrique au réseau d'alimentation en énergie (2), lequel autre dispositif comprend un dispositif d'accumulation d'énergie, par un dispositif de régulation (8, 9) affecté exclusivement au dispositif (3, 4) à partir d'un modèle de calcul (13) enregistré dans le dispositif de régulation (8) pour l'autre dispositif (4) en fonction du paramètre de régulation (5) mesuré,
- régulation d'une puissance fournie au réseau d'alimentation en énergie (2) par le dispositif (3, 4), par le dispositif de régulation (8, 9) affecté exclusivement au dispositif (3, 4) en fonction du paramètre de régulation (5) mesuré ainsi qu'en fonction de l'autre paramètre au moins au nombre de un enregistré dans le dispositif de régulation (8, 9), **caractérisé par** une
- compensation de la perte énergétique survenant dans le dispositif d'accumulation d'énergie, par la délivrance de puissance ou la fourniture de puissance du premier dispositif,
compensation pour laquelle une perte énergétique survenant dans le dispositif d'accumulation d'énergie est prescrite dans le modèle de calcul (13) enregistré dans le dispositif de régulation (8) pour un fonctionnement du dispositif d'accumulation d'énergie.

12. Procédé selon la revendication 11,
**caractérisé par** les étapes de procédé :
- mesurage du paramètre de régulation (5) du réseau d'alimentation en énergie (2) par un dispositif de mesure (7, 6) de l'autre dispositif (4, 3) différent de l'un pour fournir une puissance électrique au réseau d'alimentation en énergie ;
- régulation d'une puissance fournie par l'autre dispositif (4, 3) au réseau d'alimentation en énergie (2) par un dispositif de régulation (9, 8) affecté exclusivement à l'autre dispositif (4, 3), en fonction du paramètre de régulation (5) mesuré.
